# EUROPÄISCHE PATENTSCHRIFT

(11) **EP 1 606 111 B1**
(45) Veröffentlichungstag und Bekanntmachung des Hinweises auf die Patenterteilung: **08.07.2009**
(21) Anmeldenummer: 04713057.0
(22) Anmeldetag: 20.02.2004
(51) Int. Cl.: B32B 27/32

(54) **METALLISIERTE OPAKE FOLIE**
METALLISIED OPAQUE FILM
FEUILLE OPAQUE METALLISEE

(30) Priorität: 20.02.2003 DE 10307133; 26.11.2003 DE 10355231
(43) Veröffentlichungstag der Anmeldung: 21.12.2005
(73) Patentinhaber: Treofan Germany GmbH & Co.KG, 66539 Neunkirchen (DE)
(72) Erfinder: HÜTT, Detlef, 66265 Heusweiler (DE); DÜPRE, Yvonne, 67661 Kaiserslautern (DE); KOCHEM, Karl-Heinz, 66539 Neunkirchen (DE)
(74) Vertreter: Kremer, Viola
(86) Internationale Anmeldenummer: PCT/EP2004/001680
(87) Internationale Veröffentlichungsnummer: WO 2004/073979

(56) Entgegenhaltungen:
- EP-A- 0 361 280
- WO-A-20/04014650

## Beschreibung

Die vorliegende Erfindung betrifft die Verwendung einer metallisierten opaken Polypropylenfolie für Verpackungen, sowie ein Verfahren ihrer zur Herstellung.

Biaxial orientierte Polypropylenfolien (boPP) werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Neben den transparenten Folien haben sich opake Polypropylenfolien in den vergangenen Jahren sehr erfolgreich entwickelt. Zum einen ist die besondere Optik (Opazität und Weißgrad) dieser Folien für einige Anwendungen besonders wünschenswert. Zum anderen bieten opake Folien dem Anwender eine höhere Ausbeute auf Grund der reduzierten Dichte dieser Folien.

Trotz dieser Vielfalt günstiger Eigenschaften gibt es noch heute Bereiche in denen die Polypropylenfolie mit anderen Materialien kombiniert werden muß, um bestimmte Defizite auszugleichen. Insbesondere für feuchtigkeits- und sauerstoffempfindliche Füllgüter konnten sich Polypropylenfolien als alleiniges Verpackungsmaterial bisher nicht durchsetzen. Beispielsweise spielt im Bereich der Snack Verpackung sowohl die Wasserdampfbarriere als auch die Sauerstoffbarriere eine entscheidende Rolle. Bei einer Wasseraufnahme von nur etwa 3% werden Kartoffelchips und andere Snackartikel so pappig, daß der Verbraucher sie als ungenießbar empfindet. Zusätzlich muß die Sauerstoffbarriere sicherstellen, daß die in den Snackartikeln enthaltenen Fette nicht durch Photooxidation einen ranzigen Geschmack entwickeln. Diesen Anforderungen genügt die Polypropylenfolie alleine als Verpackungsmaterial nicht.

Noch problematischer sind die Barriereeigenschaften von Polypropylenfolien mit einer vakuolenhaltigen Basisschicht, da bei diesen Typen die Vakuolen in der Basisschicht die Wasserdampfbarriere zusätzlich beeinträchtigten. Beispielweise beträgt die Wasserdampfbarriere einer transparenten biaxial orientierten Polypropylenfolie von 25 µm ca. 4,4 g/m² * Tag bei 38°C. Einen vergleichbaren Barrierewert erreicht man bei einer opaken Folie mit vakuolenhaltiger Basisschicht erst ab einer Dicke von 35 µm. Die Sauerstoffbarriere ist sowohl bei transparenten als auch bei opaken Polypropylenfolien für viele Anwendungen völlig unzureichend.

Es ist bekannt die Barriereeigenschaften von boPP durch eine Metallisierung zu verbessern, wodurch sowohl die Wasserdampf- als auch die Sauerstoffdurchlässigkeit erheblich erniedrigt wird. Opake Folien kommen bei der Metallisierung in der Regel nicht zum Einsatz, da deren Barriere ohne Metallisierung wesentlich schlechter ist als die einer transparenten Basisfolie. Die Barriere der metallisierten Folien ist umso besser je besser die Barriere der Grundfolie vor der Metallisierung ist. Beispielsweise kann die Sauerstoffdurchlässigkeit einer transparenten 20µm boPP Folie durch Metallisierung und Laminierung mit einer weiteren 20µm transparenten Folie auf ca. 40 cm³/m² * Tag * bar reduziert werden. (siehe VR Interpack 99 Special D28 "Der gewisse Knack").

In einigen Anwendungsbereichen soll die gute Barriere, wie man sie von transparenten metallisierten Folien kennt mit der speziellen opaken Optik der vakuolenhaltigen Folien kombiniert werden, d.h. eine metallisierte opake Barrierefolie zur Verfügung gestellt werden. Um die bekannten schlechten Barriere-Ausgangswerte von opaken Folien auszugleichen, werden vor der Metallisierung Barriere-Beschichtungen, beispielsweise aus PVOH, PVDC, EVOH aufgebracht, um die Durchlässigkeit des zu metallisierenden Substrats zu erniedrigen. Nach Metallisierung auf der Beschichtung können hervorragende Barrierewerte auch bei opaken Folien erreicht werden. Diese Lösungen sind jedoch sehr teuer, da zwei teure Veredlungsschritte notwendig sind.

In einigen Anwendungen werden boPP-Folien auch nur im Hinblick auf den optischen Eindruck metallisiert. Hier soll beim Verbraucher der Eindruck einer hochwertigen Verpackung entstehen, ohne daß tatsächlich eine bessere Barriere vorliegt. In diesen Fällen sind die Anforderungen an die metallisierte Folie vergleichsweise unkritisch. Die metallisierte Folie muß nur eine gleichmäßige Optik und eine hinreichende Metallhaftung aufweisen. Die erzielte Barriere spielt keine Rolle und ist nur unwesentlich besser.

DE 39 33 695 beschreibt eine nicht siegelbare Folie aus einer Polypropylen-Basisschicht und mindestens einer Deckschicht, aus einem speziellen Ethylen-Propylen-Copolymeren. Dieses Copolymere hat einen Ethylengehalt von 1,2 bis 2,8 Gew.-% und einen Verteilungsfaktor von >10 und eine Schmelzeenthalpie von > 80 J/g und einen Schmelzindex von 3 bis 12 g/10min (21,6N und 230°C) aus. Es ist beschrieben, daß die Eigenschaften des Copolymeren zur Verbesserung der Bedruckbarkeit und der optischen Eigenschaften in diesen engen Grenzen gehalten werden müssen. Diese Schrift bezieht sich insgesamt auf transparente Folien.

EP 0 361 280 beschreibt metallisierbare, siegelfähige, biaxial orientierte Mehrschichtfolie für die Metallisieranwendung aus einer Polypropylen-Basisschicht und einer ersten polyolefinischen siegelfähigen Oberflächenschicht und einer zweiten polyolefinischen metallisierbaren Oberflächenschicht. Die zweite metallisierbare Oberflächenschicht enthält ein Propylen-Ethylen-Copolymeres, das einen Ethylengehalt von 1,2 bis 2,8 Gew.-%, einen Verteilungsfaktor VF von grösser 10, eine Schmelzenthalpie ΔHm grösser 90 J/g und eine Thermooxidationstemperatur Tox von grösser 240°C besitzt.

WO 2004/014650 beschreibt eine biaxial orientierte opake Polypropylenmehrschichtfolie aus einer Basisschicht und mindestens einer darauf angeordneten ersten Zwischenschicht und einer auf der ersten Zwischenschicht angeordneten ersten Deckschicht. Die erste Zwischenschicht hat im wesentlichen keine Vakuolen. Die erste Deckschicht enthält mindestens 80 Gew.-% eines Propylen-Ethylen-Copolymeren mit einem Ethylengehalt von 1,2 bis < 2,8 Gew. -% und einem Propylengehalt von 97, 2-98, 8 Gew. -% und einem Schmelzpunkt im Bereich von 145 bis 160°C und einer Schmelzenthalpie von 80 bis 110 J/g. Die Basisschicht ist vakuolenhaltig und hat eine Dichte im Bereich von 0,35 bis 0,6g/cm3 Die Erfindung betrifft die Verwendung dieser folie zur In-;old Etkiettierung von Behältern aus thermoplastischem Polymer.

Der vorliegenden Erfindung lag die Aufgabe zu Grunde eine opake Folie mit guter Barriere gegenüber Sauerstoff und Wasserdampf zur Verfügung zu stellen. Selbstverständlich müssen auch ansonsten die üblichen Gebrauchseigenschaften der Folie im Hinblick auf ihre Verwendung als Verpackungsfolie erhalten bleiben, insbesondere eine ausreichende Biegesteifigkeit, Glanz oder niedrige Dichte.

Die der Erfindung zugrundeliegende Aufgabe wird gelöst durch Verwendung einer metallisierten, biaxial orientierten opaken Polypropylenmehrschichtfolie als Verpackungsfolie mit mindestens drei Schichten aus einer vakuolenhaltigen Basisschicht und mindestens einer ersten Zwischenschicht und einer ersten Deckschicht, wobei die erste Deckschicht und die erste Zwischenschicht aufeinander liegen und die erste Zwischenschicht Propylenhomopolymer enthält und eine Dicke von 4 bis 10 µm aufweist und die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die erste Deckschicht eine Dicke von 0,3 - < 4µm und die Folie auf der Oberfläche der ersten Deckschicht metallisiert ist.

Diese Aufgabe wird weiterhin gelöst durch ein Verfahren zur Herstellung einer coextrudierten metallisierten, biaxial orientierten opaken Polypropylenmehrschichtfolie als Verpackungsfolie mit mindestens drei Schichten aus einer vakuolenhaltigen Basisschicht und mindestens einer ersten Zwischenschicht und einer ersten Deckschicht, wobei die erste Deckschicht und die erste Zwischenschicht aufeinander liegen und die erste Zwischenschicht Propylenhomopolymer enthält und eine Dicke von mindestens 4 bis 10 µm aufweist und die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die erste Deckschicht eine Dicke von 0,3 - < 4µm aufweist und die Folie auf der Oberfläche der ersten Deckschicht metallisiert ist, wobei die zu metallisierende Oberfläche unmittelbar vor der Metallisierung mittels Plasma behandelt wird.

Im Sinne der vorliegenden Erfindung ist die Basisschicht diejenige Schicht der Folie welche mindestens 40%, vorzugsweise mehr als 50% der Gesamtdicke der Folie ausmacht. Zwischenschichten sind Schichten die zwischen der Basisschicht und einer weiteren Polyolefin-Schicht liegen. Deckschichten bilden die Außenschichten der unmetallisierten coextrudierten Folie. Die zweite optionale Deckschicht kann unmittelbar auf der Basisschicht aufgebracht sein. Des weiteren gibt es Ausführungsformen bei denen beide Deckschichten auf den Zwischenschichten der Folie aufgebracht sind.

Es wurde gefunden, daß die Folie mit einer opaken Basisschicht, nach der Metallisierung überraschenderweise eine hervorragende Barriere aufweist, wenn die zu metallisierende Deckschicht auf einer Propylen-Homopolymer Zwischenschicht aufgebracht ist und die Zwischenschicht eine Dicke von 4 bis 10µm aufweist und die Deckschicht aus dem im Anspruch 1 näher definierten Propylen-Ethylen-Copolymeren mit niedrigem Ethylengehalt aufgebaut ist. Überraschenderweise genügen für die Deckschicht aus dem speziellen Copolymeren Schichtdicken im Bereich von 0,3 bis <4 µm, wenn eine entsprechend dicke Homopolymer-Zwischenschicht zusätzlich angebracht ist.

Überraschenderweise verbessert diese Maßnahme die Barriere der opaken Folie nach Metallisierung erheblich, obwohl an den unmetallsierten opaken Folien keine besonderen Barriereeigenschaften gefunden werden konnten und auch ansonsten keine besonderen Maßnahme, wie z.B. Beschichtungen, zur Verbesserung des unmetallisierten Substrats ergriffen wurden.

Die erfindungsgemäße Folien kombiniert die gewünschte opake Optik der vakuolenhaltigen Basisschicht mit einer sehr guten Barriere gegenüber Wasserdampf und Sauerstoff nach Metallisierung. Diese Folie kann daher besonders vorteilhaft zur Herstellung von Verpackungen für Wasserdampf- und Sauerstoffempfindliche Füllgüter eingesetzt werden.

Die erfindungsgemäß in der zu metallisierenden Deckschicht eingesetzten Propylencopolymeren mit einem niedrigem Ethylengehalt und einem hohem Schmelzpunkt sind an sich bekannt und werden nachstehend im Rahmen der vorliegenden Erfindung auf Grund ihres vergleichsweise geringen Ethylengehaltes auch "Minicopo" genannt. So beschreiben verschiedene Lehren den vorteilhaften Einsatz dieser Rohstoffe. Z.B. ist in EP 0 361 280 angegeben, daß dieses Material vorteilhaft als Deckschicht bei metallisierbaren Folien ist. DE 39 33 595 beschreibt verbesserte Hafteigenschaften dieser Deckschichten. Es war jedoch weder bekannt noch vorhersehbar, daß diese speziellen Copolymeren als Deckschicht einer Folie mit einer vakuolenhaltigen Basisschicht die Barriere-Eigenschaften nach Metallisierung so hervorragend verbessern, wenn eine zusätzliche dicke Homopolymer-Zwischenschicht angebracht ist.

Für die Zwecke der vorliegenden Erfindung sind Propylen-Ethylen-Copolymere mit einem Ethylengehalt von 1,2 bis 2,8 Gew.-%, insbesondere 1,2 bis 2,3 Gew.-%, vorzugsweise 1,5 bis <2 Gew.-% besonders bevorzugt. Der Schmelzpunkt liegt vorzugsweise in einem Bereich von 150 bis 155°C und die Schmelzeenthalpie vorzugsweise in einem Bereich von 90 bis 100J/g. Der Schmelzflußindex beträgt im allgemeinen 3 bis 15g/10min, vorzugsweise 3 bis 9g/10min (230°C, 21,6N DIN 53 735). Des weiteren ist es besonders vorteilhaft, wenn ein hoher Anteil der Ethyleneinheiten isoliert zwischen zwei Propylenbausteinen in die Propylenkette eingebaut sind. Diese Charakteristik kann über einen sogenannten Verteilungsfaktor beschrieben werden, der im allgemeinen über 5, vorzugsweise über 10, insbesondere >15 betragen sollte. Die Bestimmung des Verteilungsfaktor erfolgt über 13C-NMR Spektroskopie, wie beispielsweise in DE 39 33 695 (Seite 2) beschrieben.

Im allgemeinen enthält die erste Deckschicht mindestens 80 Gew.-%, vorzugsweise 95 bis 100 Gew.-%, insbesondere 98 bis <100 Gew.-% des beschriebenen Copolymeren. Neben diesem Hauptbestandteil kann die Deckschicht übliche Additive wie Antiblockmittel, Stabilisatoren und/oder Neutralisationsmittel in jeweils wirksamen Mengen enthalten. Gegebenenfalls können geringe Mengen eines zweiten vom Minicopo verschiedenen Polyolefins, vorzugsweise Propylenpolymeren, enthalten sein, wenn dessen Anteil unter 20 Gew.-%, vorzugsweise unter 5 Gew.-%, liegt und die Metallisierbarkeit der Schicht nicht beeinträchtigt wird. Derartige Ausführungsformen sind nicht bevorzugt, aber denkbar falls beispielsweise Antiblockmittel über Konzentrate eingearbeitet werden, die auf einem anderen Polymeren, wie z.B. Propylenhomopolymer oder andere Propylenmischpolymerisaten, beruhen. Im Hinblick auf die Metallisierung sollten Additive, die die Metallisierbarkeit beeinträchtigen in der Deckschicht nicht oder nur in geringsten Mengen enthalten sein. Dies gilt beispielsweise für migrierende Gleitmittel oder Antistatik. Die Dicke der ersten Deckschicht liegt erfindungsgemäß in einem Bereich von 0,3 - < 4µm, vorzugsweise 0,3 bis 2 µm, insbesondere 0,5 - 1 µm.

Zur Verbesserung der Metallhaftung wird die Oberfläche der ersten Deckschicht im allgemeinen in an sich bekannter Weise mittels Corona, Flamme oder Plasma einem Verfahren zur Erhöhung der Oberflächenspannung unterworfen. Typischerweise liegt dann die Oberflächenspannung der so behandelten noch nicht metallisierten Deckschicht in einem Bereich von 35 bis 45 mN/m.

Es ist erfindungswesentlich, daß die erste Deckschicht auf einer ersten Zwischenschicht aus Propylenhomopolymer aufgebracht ist. Diese erste Zwischenschicht enthält im allgemeinen mindestens 80 Gew.-%, vorzugsweise 95 bis 100 Gew.-%, insbesondere 98 bis <100 Gew.-% Propylenhomopolymer. Neben diesem Hauptbestandteil kann die erste Zwischenschicht Additive wie Stabilisatoren und/oder Neutralisationsmittel, sowie gegebenenfalls Pigmente, z.B. TiO2, in jeweils wirksamen Mengen enthalten. Gegebenenfalls können geringe Mengen eines zweiten verschiedenen Propylenpolymeren, enthalten sein, wenn dessen Anteil unter 20 Gew.-%, vorzugsweise unter 5 Gew.-%, liegt und die Metallisierbarkeit der Schicht nicht beeinträchtigt. Derartige Ausführungsformen sind nicht bevorzugt, aber denkbar falls beispielsweise Pigmente über Konzentrate eingearbeitet werden, die auf einem anderen Polymeren beruhen. Im Hinblick auf die Metallisierung sollten. migrierende Gleitmittel oder Antistatika nicht oder nur in geringsten Mengen enthalten sein. Die Dicke der ersten Zwischenschicht liegt erfindungsgemäß in einem Bereich von 4 bis 10µm, vorzugsweise 5 bis 8µm.

Das Propylenhomopolymere der ersten Zwischenschicht besteht zu 100 Gew.-% aus Propyleneinheiten, wobei gegebenenfalls geringste Menge an Comonomer aus dem Polymerisationsprozeß vorhanden sein können, die jedoch einen Anteil von 1 Gew.-%, vorzugsweise 0,5 Gew.-% nicht überschreiten. Das Propylenhomopolymer besitzt einen Schmelzpunkt von 155 bis 165°C, vorzugsweise 160 - 162°C und im allgemeinen einen Schmelzflußindex von 1 bis 10 g/10 min, vorzugsweise 2 bis 8 g/10 min, bei 230°C und einer Kraft von 21,6 N (DIN 53735). Die Propylenpolymeren sind isotaktische Propylenhomopolymer mit einem ataktischen Anteil von 15 Gew.-% und weniger,. Die angegebenen Gewichtsprozente beziehen sich auf das jeweilige Polymere.

Ausführungsformen mit einer weißen ersten Zwischenschicht enthalten im allgemeinen 2 - 15 Gew.-%, vorzugsweise 3 - 10 Gew.-% TiO2. Geeignete TiO2 sind nachstehend im Zusammenhang mit der Basisschicht ausführlich beschrieben. Derartig eingefärbte Zwischenschichten wirken vorteilhaft als "optische" Barriere und verhindern das Durchscheinen der Metallschicht auf der gegenüberliegenden opaken Seite der Folie und verleihen der Folie auf dieser opaken Seite ein vorteilhaftes weißes Aussehen.

Die erfindungsgemäße Folie zeichnet sich weiterhin durch Vakuolen in der Basisschicht aus, die der Folie ein opakes Aussehen verleihen. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die Basisschicht der Mehrschichtfolie enthält Polyolefin, vorzugsweise ein Propylenpolymer und vakuoleninitierende Füllstoffe sowie gegebenenfalls weitere übliche Additive in jeweils wirksamen Mengen. Im allgemeinen enthält die Basisschicht mindestens 70 Gew.-%, vorzugsweise 75 bis 98 Gew.-%, insbesondere 85 bis 95 Gew.-%, des Polyolefins, jeweils bezogen auf das Gewicht der Schicht. In einer weiteren Ausführungsform kann die Basisschicht zusätzlich Pigmente, insbesondere TiO₂ enthalten.

Als Polyolefine der Basisschicht sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 1 bis 10 g/10 min, vorzugsweise 2 bis 8 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, MDPE, LDPE, VLDPE und LLDPE, wobei der Anteil dieser Polyolefine jeweils 15 Gew.-%, bezogen auf die Polymermischung, nicht übersteigt.

Die opake Basisschicht der Folie enthält vakuoleninitierende Füllstoffe im allgemeinen in einer Menge von maximal 30 Gew.-%, vorzugsweise 2 bis 25 Gew.-%, insbesondere 2 bis 15 Gew.-%, bezogen auf das Gewicht der Basisschicht.

Im Sinne der vorliegenden Erfindung sind vakuoleniniziierende Füllstoffe feste Teilchen, die mit der Polymermatrix unverträglich sind und beim Verstrecken der Folie zur Bildung von vakuolenartigen Hohlräumen führen, wobei Größe, Art und Anzahl der Vakuolen von der Menge und der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1 bis 4 µm. Der chemische Charakter der Teilchen spielt eine untergeordnete Rolle.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere Copolymere von cyclischen Olefinen (COC) wie in EP-A-O 623 463 beschrieben, Polyester, Polystyrole, Polyamide, halogenierte organische Polymere, wobei Polyester wie beispielsweise Polybutylenterephthalate und Cycloolefincopolymere bevorzugt sind. Unverträgliche Materialien bzw. unverträgliche Polymere im Sinne der vorliegenden Erfindung bedeutet, daß das Material bzw. das Polymere in der Folie als separates Teilchen bzw. als separate Phase vorliegt.

In einer weiteren Ausführungsform kann die Basisschicht zusätzlich Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Basisschicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Der Begriff "Pigmente" ist im allgemeinen an einen mittleren Teilchendurchmesser im Bereich von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolin-Ton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden. Titandioxid ist besonders bevorzugt. Verschiedene Modifikationen und Beschichtungen von TiO₂ sind an sich im Stand der Technik bekannt.

Die Dichte der Folie wird wesentlich von der Dichte der Basisschicht bestimmt. Die Dichte der vakuolenhaltigen Basisschicht, wird im allgemeinen durch die Vakuolen reduziert sein, sofern nicht größere Mengen an TiO2 den dichtereduzierenden Effekt der Vakuolen kompensieren. Im allgemeinen liegt die Dichte der opaken Basisschicht in einem Bereich von 0,45 - 0,85g/cm³. Die Dichte der Folie kann für die beschriebenen weiß-opaken Ausführungsformen in einem größeren Bereich variieren und liegt im allgemeinen in einem Bereich von 0,5 bis 0,95g/cm³, vorzugsweise 0,6 bis 0,9g/cm³. Die Dichte wird grundsätzlich durch Zusatz von TiO₂ erhöht, aber gleichzeitig durch die vakuoleninitierenden Füllstoffe in der Basisschicht erniedrigt. Für eine Basisschicht, welche kein dichteerhöhendes TiO2 enthält liegt die Dichte der opaken Basisschicht vorzugsweise in einem Bereich von 0,45 bis 0,75 g/cm³, wohingegen für die weiß-opake Basisschicht der Bereich von 0,6 bis 0,9g/cm³ bevorzugt ist

Die Gesamtdicke der Folie liegt im allgemeinen in einem Bereich von 20 bis 100µm, vorzugsweise 25 bis 60 µm, insbesondere 30 bis 50µm. Die Dicke der Basisschicht beträgt entsprechend 10 bis 50µm, vorzugsweise 10 bis 40µm.

In einer weiteren bevorzugten Ausführungsform umfaßt die Folie noch weitere Schichten, die auf der gegenüberliegenden Seite der Basisschicht aufgebracht sind. Durch eine zweite Deckschicht resultieren vierschichtige Folien. Ausführungsformen die zusätzlich eine zweite Zwischenschicht und eine darauf aufgebrachte zweite Deckschicht aufweisen führen zu fünfschichtige Folien. In diesen Ausführungsformen beträgt die Dicke der zweiten Deckschicht im allgemeinen 0,5 - 3 µm, Zwischenschichten liegen im Bereich von 1 bis 8 µm. Kombinationen aus Zwischenschicht und Deckschicht haben vorzugsweise eine Gesamtdicke von 2 bis 8 µm. Als weitere Schichten sind siegelfähige Schichten bevorzugt, wobei hierunter sowohl heißsiegelfähige als auch kaltsiegelfähige Schichten verstanden werden. Kaltsiegelbeschichtungen können auch direkt auf die Oberfläche der Basisschicht aufgebracht werden. Im allgemeinen ist es jedoch bevorzugt die Basisschicht zunächst mit einer polymeren Deckschicht abzudecken und die Kaltsiegelbeschichtung auf diese polymere Deckschicht aufzubringen.

Die zusätzliche Deckschicht und Zwischenschicht enthalten im allgemeinen mindestens 80 Gew.-%, vorzugsweise 90 bis <100 Gew.% olefinische Polymere oder Mischungen daraus. Geeignete Polyolefine sind beispielsweise Polyethylene, Propylencopolymere und/oder Propylenterpolymere, sowie die bereits im Zusammenhang mit der Basisschicht beschrieben Propylenhomopolymeren.

Geeignete Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 130 °C.

Im Hinblick auf die Optik dieser Folienseite sind Ausführungsformen mit einer Propylenhomopolymer-Zwischenschicht und einer siegelfähigen Deckschicht bevorzugt. In diesem Fall ist die Zwischenschicht aus mindestens 80 Gew.-%, vorzugsweise 85 bis 98 Gew.-% Propylenhomopolymer aufgebaut und weißt eine Dicke von mindestens 2µm, vorzugsweise 2,5 bis 6 µm auf. Zur Verbesserung der Optik, insbesondere des Weißgrades, werden dieser Zwischenschicht die vorstehend für die Basisschicht beschriebenen Pigmente zugesetzt, insbesondere TiO2 in einer Menge von 2 bis 12 Gew.-%, vorzugsweise 3 bis 8 Gew.-% bezogen auf das Gewicht der Zwischenschicht.

Im allgemeinen sind auf derartig weiß eingefärbte Zwischenschichten Siegelschichten in einer Dicke von 0,3 bis 4 µm aufgebracht. Hierfür kommen übliche Siegelschichten aus Propylenco- oder Propylenterpolymeren in Frage. Geeignete Propylenco- oder Terpolymere sind im allgemeinen aus mindestens 50 Gew.-% Propylen und Ethylen und/oder Butyleneinheiten als Comonomer aufgebaut. Bevorzugt sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Diese Ausführungsformen zeichnen sich durch eine besonders vorteilhafte Optik auf der der Metallschicht gegenüberliegenden Seite aus. Der Titandioxid-Zusatz verhindert wirksam einen Durchscheinen der Metallschicht, wodurch diese "opake" Seite der Folie gräulich erscheint und die weiße Optik beeinträchtigt.

Bei Einsatz der Folie als Verpackung für Schokoladen-Produkte wird entweder die metallisierte Seite (nach Auftrag eines Haftvermittlers) oder die Oberfläche der "opaken" Seite mit einem Kaltsiegelkleber versehen. Daneben kann die Folie als normale siegelfähige Folie eingesetzt werden, bei denen die Herstellung der Verpackung über Heißsiegelung erfolgt.

Gegebenenfalls kann die Folie auch als Beutelverpackung für pulverförmige Füllgüter eingesetzt werden. Für derartige Anwendungen wird für die zweite Zwischenschicht und gegebenenfalls für die zweite Deckschicht eine Mischung aus den beschriebenen Propylen-Co- und/oder Terpolymeren und Polyethylenen eingesetzt. Diese Mischungen sind im Hinblick auf die Siegeleigenschaften der Folie besonders vorteilhaft, wenn der Beutel zum Abpacken von pulverförmigem Füllgut eingesetzt wird. Mit den gängigen Verfahren zum Abpacken von Pulvern kann eine Verunreinigung der Siegelbereiche nicht wirksam verhindert werden. Diese Verunreinigungen führen häufig zu Problemen beim Siegeln. Die Siegelnähte haben in den kontaminierten Bereiche eine verringerte oder gar keine Festigkeit, die Dichtigkeit der Siegelnaht ist ebenfalls beeinträchtigt. Überraschenderweise stören die Verunreinigungen beim Siegeln nicht oder nur noch geringfügig, wenn die Zwischenschichten aus einer Mischung aus Propylenpolymeren und Polyethylenen aufgebaut sind. Hierfür sind HDPE und/oder MDPE haltige Deckschichtmischungen mit einem HDPE oder MDPE Anteil von 10 bis 50 Gew.-%, insbesondere 15 bis 40 Gew.-% besonders vorteilhaft.

In einer weiteren Anwendung kann die erfindungsgemäße Folie zu einem Laminat verarbeitet werden. Hierbei wird vorzugsweise die metallisierte Seite gegen eine opake oder transparente Polypropylen- oder Polyethylenfolie laminiert. Diese Verbunde werden bevorzugt für die Verpackung von fetthaltigen Lebensmitteln, z.B. Trockenpulver oder Snacks, eingesetzt.

Wie bereits erwähnt enthalten alle Schichten der Folie vorzugsweise Neutralisationsmittel und Stabilisatoren in jeweils wirksamen Mengen.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phe-nolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 µm, einer absoluten Teilchengröße von kleiner 10 µm und einer spezifischen Oberfläche von mindestens 40 m²/g. Im allgemeinen werden Neutralisationsmittel in einer Menge von 50 bis 1000 ppm, bezogen auf die Schicht eingesetzt.

In einer bevorzugten Ausführungsform werden der zu metallisierenden Deckschicht als auch der gegenüberliegenden zweiten Deckschicht Antiblockmittel zugefügt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche Polymerisate wie Polymethylmethacrylat (PMMA) Polyamide, Polyester, Polycarbonate und dergleichen, bevorzugt werden Polymethylmethacrylat (PMMA), Siliciumdioxid und Calciumcarbonat. Die wirksame Menge an Antiblockmittel liegt im Bereich von 0,1 bis 2 Gew.-%, vorzugsweise 0,1 bis 0,5 Gew.-%, bezogen auf die jeweilige Deckschicht. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die Erfindung betrifft weiterhin ein Verfahren zur Herstellung der erfindungsgemäßen Mehrschichtfolie nach dem an sich bekannten Coextrusionsverfahren, wobei insbesondere das Stenterverfahren bevorzugt ist.

Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestrickte Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei die vakuoleninitierenden Füllstoffe und andere gegebenenfalls zugesetzte Additive bereits im Polymer bzw. in der Polymermischung enthalten sein können. Alternativ können diese Zusatzstoffe auch über ein Masterbatch eingearbeitet werden.

Die Schmelzen werden dann gemeinsam und gleichzeitig durch eine Flachdüse (Breitschlitzdüse) gepreßt, und die ausgepreßte mehrschichtige Folie wird auf einer oder mehreren Abzugswalzen bei einer Temperatur von 5 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m, insbesondere 39 bis 40mN/m.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 37 bis 45 mN/m bevorzugt sind.

Die coextrudierte mehrschichtige Folie wird nach den an sich bekannten Verfahren auf der äußeren Oberfläche der ersten Deckschicht mit einer Metallschicht, vorzugsweise aus Aluminium versehen. Diese Metallisierung erfolgt in einer Vakuumkammer in der Aluminium verdampft und auf der Folienoberfläche niedergeschlagen wird. In einer bevorzugten Ausführungsform wird die zu metallisierende Oberfläche unmittelbar vor der Metallisierung einer Plasmabehandlung unterworfen. Die Dicke der Metallschicht korreliert im allgemeinen mit der optische Dichte der metallisierten Folie, d.h. je dicker die Metallschicht ist, umso höher ist die optischen Dichte der metallisierten Folie. Im allgemeinen sollte die optische Dichte der erfindungsgemäße metallisierte Folie mindestens 2, insbesondere 2,5 bis 4 betragen.

Die erfindungsgemäße opake Folie zeichnet sich durch hervorragende Barrierewerte aus, welche bisher für opake Folien noch nicht realisiert wurden. Die Wasserdampfdurchlässigkeit der erfindungsgemäßen opaken metallisierten Folie liegt im allgemeinen ≤ 0,5 g/m² * Tag bei 38°C und 90% relativer Luftfeuchte, vorzugsweise in einem Bereich von 0,05 bis 0,3 g/m² * Tag. Die Sauerstoffdurchlässigkeit beträgt vorzugsweise ≤ 50 cm³/m²*Tag*bar, vorzugsweise 5 bis 30 cm³/m²*Tag*bar, insbesondere 5 bis 25 cm³/m²*Tag*bar.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 50 %.

### Bestimmung des Ethylengehalts

Der Ethylengehalt der Copolymeren wird mittels ¹³C-NMR Spektroskopie bestimmt. Die Messungen wurden mit einem Kemresonanzspektrometer der Firma Bruker Avance 360 durchgeführt. Das zu charakterisierende Copolymer wird in Tetrachlorethan gelöst, so daß eine 10% Mischung entsteht. Als Bezugsstandard wurde Octamethyltetrasiloxan (OTMS) zugegeben. Das Kernresonanzspekrum wurde bei 120°C gemessen. Die Auswertung der Spektren erfolgte wie in J.C. Randall Polymer Sequence Distribution (Academic Press, New York, 1977) beschrieben.

### Schmelzpunkt und Schmelzenthalpie

Die Bestimmung des Schmelzpunkt und der Schmelzenthalpie erfolgt mittels DSC-(Differential-Scanning-Calometrie) Messung (DIN 51 007 und DIN 53 765). Einige Milligramm (3 bis 5 mg) des zu charakterisierenden Rohstoffs werden in einem Differentialkalorimeter mit einer Heizgeschwindigkeit von 20°C pro Minute aufgeheizt. Es wird die Wärmeflußrate gegen die Temperatur aufgetragen und der Schmelzpunkt als Maximum der Schmelzkurve und die Schmelzenthalpie als Fläche des jeweiligen Schmelzepeaks ermittelt.

### Dichte

Die Dichte wird nach DIN 53 479, Verfahren A, bestimmt.

### Optische Dichte

Die optische Dichte ist die Messung der Durchlässigkeit eines definierten Lichtstrahls. Die Messung wird mit einem Densitometer vom Typ TCX der Firma Tobias Associates Inc durchgeführt. Die optische Dichte ist ein Relativwert der dimensionslos angegeben wird.

### Oberflächenspannung

Die Oberflächenspannung wurde mittels Tintenmethode nach DIN 53 364 bestimmt.

Die Erfindung wird nunmehr durch die nachfolgenden Beispiele erläutert.

### Beispiel 1:

Nach dem Coextrusionsverfahren wurde aus einer Breitschlitzdüse bei einer Extrusionstemperatur von 240 bis 270°C eine fünfschichtige Vorfolie extrudiert. Diese Vorfolie wurde zunächst auf einer Kühlwalze abgezogen und abgekühlt.

Anschließend wurde die Vorfolie in Längs- und Querrichtung orientiert und abschließend fixiert. Die Oberfläche der ersten Deckschicht wurde mittels Corona zur Erhöhung der Oberflächenspannung vorbehandelt. Die fünfschichtige Folie hatte einen Schichtaufbau erste Deckschicht/erste Zwischenschicht/Basisschicht/zweite Zwischenschicht /zweite Deckschicht. Die einzelnen Schichten der Folie hatten die folgende Zusammensetzung:

### Erste Deckschicht (0,5 µm):

~100 Gew.-% Ethylen-Propylencopolymerisat mit einem Ethylen-Anteil von 1,7 Gew.-% (bezogen auf das Copolymer) und einem Schmelzpunkt von 155 °C; und einem Schmelzflußindex von 8,5 g/10 min bei 230 °C und 2,16 kg Belastung (DIN 53 735) und einer Schmelzeenthalpie von 96,9 J/g.

### Erste Zwischenschicht (6,5µm)

∼100 Gew.% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735)

### Basisschicht:

91,6 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und
6,0 Gew.-% Calciumcarbonat, mittlerer Teilchendurchmesser ca. 2,7 µm
2,4 Gew.-% Titandioxid mittlerer Teilchendurchmesser von 0,1 bis 0,3 µm

### Zweite Zwischenschicht (3µm)

96,4 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und
3,6 Gew.-% Titandioxid mittlerer Teilchendurchmesser von 0,1 bis 0,3 µm

### Zweite Deckschicht (0,7 µm):

99,7 Gew.-% Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g
0,1 Gew.-% Antiblockmittel mit einem mittleren Teilchendurchmesser ca. 4µm (Sylobloc 45)

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt:

| | |
|---|---|
| Extrusion: | Extrusionstemperatur ca. 250 -270°C) |
| Abkühlwalze: | Temperatur 30°C, |
| Längsstreckung: | T = 120 °C |
| Längsstreckung um den | Faktor 5 |
| Querstreckung: | T = 160 °C |
| Querstreckung um den | Faktor 9 |
| Fixierung | T = 100°C |

Die Folie wurde auf der Oberfläche der ersten Deckschicht mittels Corona oberflächenbehandelt und wies eine Oberflächenspannung von 38mN/m auf. Die Folie hatte eine Dicke von 35 µm und ein opakes Aussehen.

### Beispiel 2:

Es wurde eine Folie nach Beispiel 1 hergestellt. Im Unterschied zu Beispiel 1 enthielten die zweite Zwischenschicht kein TiO2. Die Zusammensetzungen der übrigen Schichten sowie die Herstellbedingungen wurden nicht geändert.

### Vergleichsbeispiel 1

Es wurde eine opake Folie nach Beispiel 1 hergestellt. Im Unterschied zu Beispiel 1 wurde die erste Zwischenschicht weggelassen, dh. die erste Deckschicht wurde direkt auf die Oberfläche der Basisschicht aufgebracht.

### Vergleichsbeispiel 2

Es wurde eine opake Folie nach Beispiel 1 hergestellt. Im Unterschied zu Beispiel 1 wurde in der ersten Deckschicht ein übliches Propylen-Copolymerisat eingesetzt.:

### erste Deckschicht (0,5µm):

~ 100 Ges.-% Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g

### Vergleichsbeispiel 3

Es wurde ein Folie wie Beispiel 2 hergestellt. Im Unterschied zu Beispiel 2 enthielt die Basisschicht keine vakuoleninitierenden Füllstoffe und kein TiO2 und auch die zweite Zwischenschicht kein TiO2. Im Ergebnis resultiere daraus eine dreischichtige Folie, da die Zwischenschichten und die Basisschicht nur aus Propylenhomopolymer bestanden.

Alle Folien nach den Beispielen und den Vergleichsbeispielen wurden in einer Vakuum Metallisieranlage auf der Oberfläche der ersten Deckschicht mit einer Aluminiumschicht beschichtet. Zur Verbesserung der Metallhaftung wurde die Oberfläche unmittelbar vor der Beschichtung einer Plasmabehandlung unterworfen. Die Eigenschaften der metallisierten Folien nach den Beispielen und den Vergleichsbeispielen sind in der Tabelle 1 zusammengestellt. Es zeigt sich, daß die erfindungsgemäßen Folien nach den Beispielen 1 und 2 hervorragende Barrierewerte gegen Wasserdampf und Sauerstoff und gleichzeitig auf der gegenüberliegenden Seite eine gute opake bzw. weiße Optik aufweisen.

| Beispiel | Dicke µm | Dichte der Folie g/cm³ | Optik* | WDD 38°C 90% rel. Feuchte *** | OTR 23°C, 50% rel. Feuchte *** |
|---|---|---|---|---|---|
| Bsp. 1 | 35 | 0,71 | ++ | 0,15 | 9 |
| Bsp. 2 | 35 | 0,71 | + | 0,14 | 10 |
| VB 1 | 35 | 0,71 | ++ | 0,5 | >100 |
| VB 2 | 35 | 0,71 | ++ | 0,5 | 135 |
| VB 3 | 35 | 0,91 | transparent | 0,3 | 30 |

| | | | | | |
|---|---|---|---|---|---|
| * qualitative Beurteilung des Durchscheinen der Metallschicht auf der gegenüberliegenden Seite *** nach Metallisierung | | | | | |

## Patentansprüche

1. Verwendung einer metallisierten, biaxial orientierten opaken Polypropylenmehrschichtfolie als Verpackungsfolie mit mindestens drei Schichten aus einer vakuolenhaltigen Basisschicht und mindestens einer ersten Zwischenschicht und einer ersten Deckschicht, **dadurch gekennzeichnet, daß** die erste Deckschicht und die erste Zwischenschicht aufeinander liegen und die erste Zwischenschicht Propylenhomopolymer enthält und eine Dicke von mindestens 4 bis 10 µm aufweist und die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die erste Deckschicht eine Dicke von 0,3 - < 4µm aufweist und die Folie auf der Oberfläche der ersten Deckschicht metallisiert ist.

2. Verwendung nach Anspruch 1, **dadurch gekennzeichnet, daß** das Propylen-Ethylen-Copolymere 1,5 bis 2,3 Gew.-% Ethylen enthält und einen Schmelzpunkt im Bereich von 150 bis 155 °C und eine Schmelzenthalpie von 90 bis 100 J/g hat.

3. Verwendung nach Anspruch 1 oder 2, **dadurch gekennzeichnet, daß** die erste Deckschicht mindestens 80 Gew.-%, bezogen auf das Gewicht der Deckschicht, des Propylen-Ethylen-Copolymeren enthält.

4. Verwendung nach einem der Ansprüche 1 bis 3, **dadurch gekennzeichnet, daß** die erste Zwischenschicht mindestens 80 Gew.-% eine Propylenhomopolymeren enthält, welches einen Schmelzpunkt von 160 - 162 °C und einen Schmelzflußindex von 1 bis 10 g/10min aufweist.

5. Verwendung nach einem der Ansprüche 1 bis 4, **dadurch gekennzeichnet, daß** die erste Zwischenschicht 2 bis 15 Gew.-% TiO2 enthält.

6. Verwendung nach einem der Ansprüche 1 bis 5, **dadurch gekennzeichnet, daß** die Basisschicht aus Propylenhomopolymer aufgebaut ist und 2 bis 15 Gew.-% vakuoleninitierende Füllstoffe enthält.

7. Verwendung nach einem der Ansprüche 1 bis 6, **dadurch gekennzeichnet, daß** die Basisschicht 1 bis 8 Gew.-% TiO2 enthält.

8. Verwendung nach einem der Ansprüche 1 bis 7, **dadurch gekennzeichnet, daß** die Basisschicht eine Dichte von 0,45 - 0,85 cm³/g aufweist.

9. Verwendung nach einem der Ansprüche 1 bis 8, **dadurch gekennzeichnet, daß** die Folie eine zweite Deckschicht aufweist.

10. Verwendung nach Anspruch 9, **dadurch gekennzeichnet, daß** die zweite Deckschicht mindestens 80 bis <100 Gew.-% eines Propylenpolymeren mit mindestens 80 Gew.-% Propyleneinheiten enthält.

11. Verwendung nach Anspruch 10, **dadurch gekennzeichnet, daß** das Propylenpolymere ein Propylenco- und/oder Propylenterpolymere mit einem Propylengehalt von mindestens 90 bis 97 Gew.-%, ist.

12. Verwendung nach einem der Ansprüche 9 bis 11, **dadurch gekennzeichnet, daß** die zweite Deckschicht siegelfähig ist und eine Dicke von 0,3 bis 4 µm ausweist.

13. Verwendung nach einem der Ansprüche 9 bis 12, **dadurch gekennzeichnet, daß** zwischen der Basisschicht und der zweiten Deckschicht eine zweite Zwischenschicht angebracht ist.

14. Verwendung nach Anspruch 13, **dadurch gekennzeichnet, daß** die Zwischenschicht aus 80 bis < 100 Gew.-% Propylenhomopolymer aufweist.

15. Verwendung nach Anspruch 14, **dadurch gekennzeichnet, daß** die zweite Zwischenschicht, 2 bis 12 Gew.-% TiO2 enthält.

16. Verwendung nach einem der Ansprüche 11 bis 15 , **dadurch gekennzeichnet, daß** die Folie bei einer Temperatur von mindestens 120° gesiegelt wird.

17. Verwendung nach einem der Ansprüche 1 bis 15 , **dadurch gekennzeichnet, daß** auf mindestens eine Oberfläche der Folie eine Kaltsiegelbeschichtung aufgebracht wird und die Siegelung der Folie bei Raumtemperatur erfolgt.

18. Verwendung nach Anspruch 9, **dadurch gekennzeichnet, daß** die zweite Deckschicht mindestens 80 bis <100 Gew.-% einer Polymer-Mischung enthält, wobei die Mischung aus Propylenpolymeren mit mindestens 80 Gew.-% Propyleneinheiten und Polyethylen besteht und wobei die Mischung 10 bis 50 Gew.-%, bezogen auf das Gewicht der Mischung, des Polyethylens enthält.

19. Verwendung nach Anspruch 18, **dadurch gekennzeichnet, daß** das Polyethylen ein HDPE oder MDPE ist.

20. Verwendung nach Anspruch 18 oder 19 zur Herstellung einer Verpackung die pulverförmiges Füllgut enthält.

21. Verwendung einer metallisierten, biaxial orientierten opaken Polypropylenmehrschichtfolie mit mindestens drei Schichten aus einer vakuolenhaltigen Basisschicht und mindestens einer ersten Zwischenschicht und einer ersten Deckschicht, wobei die erste Deckschicht und die erste Zwischenschicht aufeinander liegen und die erste Zwischenschicht Propylenhomopolymer enthält und eine Dicke von mindestens 4 bis 10 µm aufweist und die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die erste Deckschicht eine Dicke von 0,3 - < 4µm aufweist und die Folie auf der Oberfläche der ersten Deckschicht metallisiert ist zur Herstellung eines Laminats, **dadurch gekennzeichnet, daß** die metallisierte Seite der Folie gegen eine weitere Polypropylenfolien oder gegen eine Polyethylenfolie kaschiert wird.

22. Verwendung nach einem der Ansprüche 1 bis 21, **dadurch gekennzeichnet, daß** die Folie auf der Oberfläche der ersten Deckschicht während der Folienherstellung mittels Corona, Plasma, oder Flamme vorbehandelt wird.

23. Verfahren zur Herstellung einer coextrudierten metallisierten, biaxial orientierten opaken Polypropylenmehrschichtfolie als Verpackungsfolie mit mindestens drei Schichten aus einer vakuolenhaltigen Basisschicht und mindestens einer ersten Zwischenschicht und einer ersten Deckschicht, wobei die erste Deckschicht und die erste Zwischenschicht aufeinander liegen und die erste Zwischenschicht Propylenhomopolymer enthält und eine Dicke von mindestens 4 bis 10 µm aufweist und die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die erste Deckschicht eine Dicke von 0,3 - < 4µm aufweist und die Folie auf der Oberfläche der ersten Deckschicht metallisiert ist, **dadurch gekennzeichnet, daß** die zu metallisierende Oberfläche unmittelbar vor der Metallisierung mittels Plasma behandelt wird.

24. Verfahren nach Anspruch 23, **dadurch gekennzeichnet, daß** die Folie auf der Oberfläche der ersten Deckschicht während der Folienherstellung mittels Corona, Plasma, oder Flamme vorbehandelt wird.

## Claims

1. Use of a metallized, biaxially oriented opaque polypropylene multilayered film as packaging film, having at least three layers, of a vacuole-containing base layer and at least one first intermediate layer and one first covering layer, **characterized in that** the first covering layer and the first intermediate layer lie one on top of another and the first intermediate layer contains propylene homopolymer and has a thickness of at least 4 to 10 µm and the first covering layer contains at least 80 % by weight of a propylene-ethylene copolymer, which has an ethylene content of 1.2 to < 2.8 % by weight and a propylene content of 97.2-98.8 % by weight and a melting point in the range from 145 to 160°C and a melting enthalpy of 80 to 110 J/g and the first covering layer has a thickness of 0.3-< 4 µm and the film is metallized on the surface of the first covering layer.

2. Use according to Claim 1, **characterized in that** the propylene-ethylene copolymer contains 1.5 to 2.3 % by weight ethylene and has a melting point in the range from 150 to 155°C and a melting enthalpy of 90 to 100 J/g.

3. Use according to Claim 1 or 2, **characterized in that** the first covering layer contains at least 80 % by weight of the propylene-ethylene copolymer, in relation to the weight of the covering layer.

4. Use according to any of Claims 1 to 3, **characterized in that** the first intermediate layer contains at least 80 % by weight of a propylene homopolymer, which has a melting point of 160-162°C and a melt flow index of 1 to 10 g/10 min.

5. Use according to any of Claims 1 to 4, **characterized in that** the first intermediate layer contains 2 to 15 % by weight Ti02.

6. Use according to any of Claims 1 to 5, **characterized in that** the base layer is formed from propylene homopolymer and contains 2 to 15 % by weight vacuole-initiating fillers.

7. Use according to any of Claims 1 to 6, **characterized in that** the base layer contains 1 to 8 % by weight Ti02.

8. Use according to any of Claims 1 to 7, **characterized in that** the base layer has a density of 0.45-0.85 cm³/g.

9. Use according to any of Claims 1 to 8, **characterized in that** the film has a second covering layer.

10. Use according to Claim 9, **characterized in that** the second covering layer contains at least 80 to < 100 % by weight of a propylene polymer having at least 80 % by weight propylene units.

11. Use according to Claim 10, **characterized in that** the propylene polymer is a propylene copolymer and/or propylene terpolymer having a propylene content of at least 90 to 97 % by weight.

12. Use according to any of Claims 9 to 11, **characterized in that** the second covering layer is sealable and has a thickness of 0.3 to 4 µm.

13. Use according to any of Claims 9 to 12, **characterized in that** a second intermediate layer is attached between the base layer and the second covering layer.

14. Use according to Claim 13, **characterized in that** the intermediate layer has 80 to < 100 % by weight propylene homopolymer.

15. Use according to Claim 14, **characterized in that** the second intermediate layer contains 2 to 12 % by weight Ti02.

16. Use according to any of Claims 11 to 15, **characterized in that** the film is sealed at a temperature of at least 120°C.

17. Use according to any of Claims 1 to 15, **characterized in that** a cold seal coating is applied to at least one surface of the film and the film is sealed at room temperature.

18. Use according to Claim 9, **characterized in that** the second covering layer contains at least 80 to < 100 % by weight of a polymer mixture, the mixture comprising propylene polymers having at least 80 % by weight propylene units and polyethylene and the mixture containing 10 to 50 % by weight of the polyethylene in relation to the weight of the mixture.

19. Use according to Claim 18, **characterized in that** the polyethylene is an HDPE or MDPE.

20. Use according to Claim 18 or 19 for the manufacture of a packaging which contains powdered bulk product.

21. Use of a metallized, biaxially oriented opaque polypropylene multilayered film with at least three layers of a vacuole-containing base layer and at least one first intermediate layer and one first covering layer, wherein the first covering layer and the first intermediate layer lie one on top of another and the first intermediate layer contains propylene homopolymer and has a thickness of at least 4 to 10 µm and the first covering layer contains at least 80 % by weight of a propylene-ethylene copolymer, which has an ethylene content of 1.2 to < 2.8 % by weight and a propylene content of 97.2-98.8 % by weight and a melting point in the range from 145 to 160°C and a melting enthalpy of 80 to 110 J/g and the first covering layer has a thickness of 0.3-< 4µm and the film is metallized on the surface of the first covering layer for the production of a laminate, **characterized in that** the metallized side of the film is laminated against a further polypropylene film or against a polyethylene film.

22. Use according to any of Claims 1 to 21, **characterized in that** the film manufacture is pre-treated by means of corona, plasma or flame.

23. Method for the manufacture of a coextruded metallized, biaxially oriented opaque polypropylene multilayered film as packaging film with at least three layers of a vacuole-containing base layer and at least one first intermediate layer and one first covering layer, wherein the first covering layer and the first intermediate layer lie one on top of another and the first intermediate layer contains propylene homopolymer and has a thickness of at least 4 to 10 µm and the first covering layer contains at least 80 % by weight of a propylene-ethylene copolymer, which has an ethylene content of 1.2 to < 2.8 % by weight and a propylene content of 97.2-98.8 % by weight and a melting point in the range from 145 to 160°C and a melting enthalpy of 80 to 110 J/g and the first covering layer has a thickness of 0.3-< 4µm and the film is metallized on the surface of the first covering layer, **characterized in that** the surface to be metallized is treated directly before the metallization using plasma.

24. Method according to Claim 23, **characterized in that** the film is pre-treated on the surface of the first covering layer during the film manufacture using corona, plasma, or flame.

## Revendications

1. Utilisation d'une feuille multicouche en polypropylène, ladite feuille étant opaque, orientée biaxialement et métallisée, en tant que feuille d'emballage présentant au moins trois couches, s'agissant d'une couche de base contenant des vacuoles, d'au moins une première couche intermédiaire et d'une première couche de couverture, **caractérisée en ce que** la première couche de couverture et la première couche intermédiaire sont disposées l'une sur l'autre, la première couche intermédiaire contenant de l'homopolymère de propylène et présentant une épaisseur d'au moins 4 à 10 µm, et la première couche de couverture contenant au moins 80 % en poids d'un copolymère propylène-éthylène, ce dernier présentant une teneur en éthylène comprise entre 1,2 et < 2,8 % en poids et une teneur en propylène comprise entre 97,2 et 98,8 % en poids et un point de fusion compris entre 145 et 160 °C et une enthalpie de fusion comprise entre 80 et 110 J/g, ladite première couche de couverture présentant une épaisseur comprise entre 0,3 et < 4 µm et ladite feuille étant métallisée sur la surface de la première couche de couverture.

2. Utilisation selon la revendication 1, **caractérisée en ce que** le copolymère propylène-éthylène contient entre 1,5 et 2,3 % en poids d'éthylène et que son point de fusion est compris entre 150 et 155 °C et que son enthalpie de fusion est comprise entre 90 et 100 J/g.

3. Utilisation selon les revendications 1 ou 2, **caractérisée en ce que** la première couche de couverture contient au moins 80 % en poids, par rapport au poids de ladite couche de couverture, dudit copolymère propylène-éthylène.

4. Utilisation selon l'une des revendications 1 à 3, **caractérisée en ce que** la première couche intermédiaire contient au moins 80 % en poids d'un homopolymère de propylène dont le point de fusion est compris entre 160 et 162 °C et dont l'indice de fluidité à chaud est compris entre 1 et 10 g/10 min.

5. Utilisation selon l'une des revendications 1 à 4, **caractérisée en ce que** la première couche intermédiaire contient 2 à 15 % en poids de Ti02.

6. Utilisation selon l'une des revendications 1 à 5, **caractérisée en ce que** la couche de base est constituée d'homopolymère de propylène et contient 2 à 15 % en poids de charges initiatrices de vacuoles.

7. Utilisation selon l'une des revendications 1 à 6, **caractérisée en ce que** la couche de base contient 1 à 8 % en poids de Ti02.

8. Utilisation selon l'une des revendications 1 à 7, **caractérisée en ce que** la couche de base présente une densité comprise entre 0,45 et 0,85 cm³/g.

9. Utilisation selon l'une des revendications 1 à 8, **caractérisée en ce que** la feuille présente une deuxième couche de couverture.

10. Utilisation selon la revendication 9, **caractérisée en ce que** la deuxième couche de couverture contient au moins 80 à < 100 % en poids d'un polymère de propylène avec au moins 80 % en poids d'unités de propylène.

11. Utilisation selon la revendication 10, **caractérisée en ce que** le polymère de propylène est un copolymère et/ou terpolymère de propylène dont la teneur en propylène est d'au moins 90 à 97 % en poids.

12. Utilisation selon l'une des revendications 9 à 11, **caractérisée en ce que** la deuxième couche de couverture est apte au scellage et présente une épaisseur comprise entre 0,3 et 4 µm.

13. Utilisation selon l'une des revendications 9 à 12, **caractérisée en ce qu'**une deuxième couche intermédiaire est disposée entre la couche de base et la deuxième couche de couverture.

14. Utilisation selon la revendication 13, **caractérisée en ce que** ladite couche intermédiaire est composée à 80 à < 100 % en poids d'homopolymère de propylène.

15. Utilisation selon la revendication 14, **caractérisée en ce que** la deuxième couche intermédiaire contient 2 à 12 % en poids de Ti02.

16. Utilisation selon l'une des revendications 11 à 15, **caractérisée en ce que** la feuille subit un scellage à une température d'au moins 120°.

17. Utilisation selon l'une des revendications 1 à 15, **caractérisée en ce qu'**un revêtement de scellage à froid est appliqué sur au moins une surface de la feuille et que le scellage de la feuille est réalisé à température ambiante.

18. Utilisation selon la revendication 9, **caractérisée en ce que** la deuxième couche de couverture contient au moins 80 à < 100 % en poids d'un mélange polymère, ledit mélange étant composé de polymères de propylène avec au moins 80 % en poids d'unités de propylène ainsi que de polyéthylène, le mélange contenant 10 à 50 % en poids dudit polyéthylène, par rapport au poids du mélange.

19. Utilisation selon la revendication 18, **caractérisée en ce que** ledit polyéthylène est un PE-HD ou un PE-MD.

20. Utilisation selon les revendications 18 ou 19, destinée à fabriquer un emballage contenant une matière poudreuse.

21. Utilisation d'une feuille multicouche en polypropylène, ladite feuille étant opaque, orientée biaxialement et métallisée et présentant au moins trois couches, s'agissant d'une couche de base contenant des vacuoles, d'au moins une première couche intermédiaire et d'une première couche de couverture, la première couche de couverture et la première couche intermédiaire étant disposées l'une sur l'autre, et la première couche intermédiaire contenant de l'homopolymère de propylène et présentant une épaisseur d'au moins 4 à 10 µm, et la première couche de couverture contenant au moins 80 % en poids d'un copolymère propylène-éthylène, ce dernier présentant une teneur en éthylène comprise entre 1,2 et < 2,8 % en poids et une teneur en propylène comprise entre 97,2 et 98,8 % en poids et un point de fusion compris entre 145 et 160 °C et une enthalpie de fusion comprise entre 80 et 110 J/g, ladite première couche de couverture présentant une épaisseur comprise entre 0,3 et < 4 µm et ladite feuille étant métallisée sur la surface de la première couche de couverture, pour fabriquer matériau stratifié, **caractérisée en ce que** la face métallisée de la feuille est contrecollé à une autre feuille en polypropylène ou à une feuille en polyéthylène.

22. Utilisation selon l'une des revendications 1 à 21, **caractérisée en ce que** la fabrication de la feuille comporte un prétraitement de type plasma, corona ou flamme.

23. Procédé de fabrication d'une feuille multicouche en polypropylène, ladite feuille étant opaque, orientée biaxialement, métallisée et co-extrudée, destinée à être une feuille d'emballage présentant au moins trois couches, s'agissant d'une couche de base contenant des vacuoles, d'au moins une première couche intermédiaire et d'une première couche de couverture, la première couche de couverture et la première couche intermédiaire étant disposées l'une sur l'autre, et la première couche intermédiaire contenant de l'homopolymère de propylène et présentant une épaisseur d'au moins 4 à 10 µm, et la première couche de couverture contenant au moins 80 % en poids d'un copolymère propylène-éthylène, ce dernier présentant une teneur en éthylène comprise entre 1,2 et < 2,8 % en poids et une teneur en propylène comprise entre 97,2 et 98,8 % en poids et un point de fusion compris entre 145 et 160 °C et une enthalpie de fusion comprise entre 80 et 110 J/g, ladite première couche de couverture présentant une épaisseur comprise entre 0,3 et < 4 µm et ladite feuille étant métallisée sur la surface de la première couche de couverture, **caractérise en ce que** la surface à métalliser subit, immédiatement avant la métallisation, un traitement au plasma.

24. Procédé selon la revendication 23, **caractérisé en ce que** la surface de la première couche de couverture de la feuille subit, au cours de la fabrication de la feuille, un prétraitement de type corona, plasma ou flamme.
